# EUROPEAN PATENT SPECIFICATION

(11) **EP 3 381 758 B1**
(45) Date of publication and mention of the grant of the patent: **04.03.2020**
(21) Application number: 17163883.6
(22) Date of filing: 30.03.2017
(51) Int. Cl.: B60W 50/14, B60W 50/00, G05D 1/00

(54) **DRIVER INFORMATION SYSTEM AND METHOD FOR A VEHICLE CAPABLE OF DRIVING IN AN AUTONOMOUS DRIVING MODE**
FAHRERINFORMATIONSSYSTEM UND -VERFAHREN FÜR EIN FAHRZEUG, DAS ZUM FAHREN IN EINEM AUTONOMEN FAHRMODUS FÄHIG IST
SYSTÈME D'INFORMATION DE CONDUCTEUR ET PROCÉDÉ POUR UN VÉHICULE POUVANT SE DÉPLACER DANS UN MODE DE CONDUITE AUTONOME

(43) Date of publication of application: 03.10.2018
(73) Proprietor: Alpine Electronics, Inc., Tokyo (JP)
(72) Inventor: Lutz, Martin, 70567 Stuttgart (DE)
(74) Representative: Schmitt-Nilson Schraud Waibel Wohlfrom Patentanwälte Partnerschaft mbB

(56) References cited:
- EP-A1- 3 109 115
- DE-A1-102011 002 911
- DE-A1-102013 219 887
- US-A1- 2014 244 096
- US-A1- 2016 047 660

## Description

The present invention relates to a driver information system and a driver information method for a vehicle which is capable to drive in an autonomous driving mode.

Automotive vehicle technology in the area of autonomous drive capabilities is evolving rapidly. This generally involves the use of sensors for sensing vehicle parameters and surroundings, and actuators for controlling different vehicle functionalities, such as steering and braking. Vehicle on-board data processing capabilities are coupled with these sensors and actuators such that autonomous drive capabilities are enabled.

When a vehicle drives in autonomous driving mode, which typically means the driver does not perform maneuvers by typical manual operation of the vehicle (such as operating the steering wheel), it usually requires multiple data sources as inputs to perform the autonomous driving, such as detection of surrounding vehicles, road lanes, obstacles, data from navigation systems and so on. However, should one or more of these inputs not be available, there might not be sufficient information to perform autonomous driving. In such cases a driver-handover to manual driving mode may be requested in order to ensure road safety.

There are various autonomous driving mode systems on the market that enable, e.g., active lane change assist and adaptive cruise control (e.g. Tesla Model S, Daimler E-Class) . In such systems, the car moves to an adjacent lane if driver taps the turn signal. The autonomous driving mode system keeps the car in lane, also in curves or construction areas, and follows the road without having the hands on the steering wheel for a certain time. In the Daimler E-Class system, for example, the driver is provided with a visible and audible warning to take over the steering wheel after 15 seconds when the autonomous driving mode ends. The car stops at the lane if the driver does not touch the steering wheel. If the driver does not take over the steering wheel after 15 seconds, then the car stops automatically. This can be dangerous on, e.g., motorway left lanes. In the Tesla system, for example, the system switches off when no lane markings are available or no other car is ahead to follow. No warning is provided when the system automatically switches off (only steering wheel icon is getting grey instead of blue). This may result in a dangerous situation.

EP 2 982 565 A2 discloses a vehicle control device that is configured to be capable of switching from an automatic travel of the vehicle to manual travel by a driver. Particularly, a driver state detection unit is configured to detect a driver state of the driver of the vehicle, a calculation unit is configured to calculate a manual driving adaptation degree of the driver during the automatic travel of the vehicle based on the driver state detected by the driver state detection unit, and a notification unit is configured to perform an automatic travel end notification to the driver before the vehicle arrives at an automatic travel ending point set in advance, wherein the notification unit performs the automatic travel end notification at an earlier timing as the manual driving adaptation degree becomes lower.

JP 2016-045856 A discloses an automatic driving system which comprises an acquisition section for acquiring switching information which corresponds to a predetermined section of a road, and from which it can be determined whether or not the predetermined section is an inappropriate section inappropriate for a place where the automatic driving is started or finished, and a control section for giving at least one of a start notice and a finish notice about the automatic driving at other than the inappropriate section on the basis of the switching information.

JP 2016-034782 A discloses a vehicle control unit switching a vehicle driving state to manual driving if a vehicle that is being driven autonomously reaches a preset initial switching position. It comprises a driver's state determination unit determining whether a driver is in a state of accepting the manual driving, a safe space recognition unit recognizing a safe space in a route of the vehicle up to the initial switching position on the basis of map information, and a switching position setting unit setting a switching position of switching the vehicle driving state from the autonomous driving to the manual driving to a position closer to the vehicle than at least one safe space on the route if the driver's state determination unit determines that the driver is not in the state of accepting the manual driving.

In an arrangement and method for facilitating handover to and from an automated autonomous driving aid system according to EP 3 109 115 A1, data are received from a database which are used to provide an alert signal in case the data indicates an incapability of performing an automated steering at an upcoming road portion. For example, the alert signal comprises at least one of an estimated time of arrival to the upcoming portion of the road and a distance to the upcoming portion of the road which may be displayed to the driver.

US 2016/047660 A1 discloses a method for automatically driving a predetermined route which comprises scanning route data and environmental data while a route is being driven manually, determining an automatic driving strategy based on the scanned data and comparing the automatic driving strategy to the manual driving strategy. The purpose is to select an automated driving strategy which the driver himself also usually selects and to understand on what parameters the driver bases the selection of his manual driving strategy.

DE 10 2013 219887 A1 discloses a driver assistance system of a vehicle which is able to control the vehicle at least partially automatically, wherein a method alerts the driver to retake control of the vehicle from the driver assistance system based on the distance between the current location of the vehicle and an end of the autopilot capable route section. A distance information is determined between a current position of the vehicle and the end of the autopilot route section, and is compared to a first and a second threshold value, and a first or a second indication is output as a function thereof.

DE 10 2011 002911 A1 discloses a method for keeping a vehicle in a lane by means of a lane-keeping system, in which the vehicle is guided in the lane by means of automatic steering interventions. In order to warn the driver in good time about a failure of the lane-keeping system it is proposed to evaluate data relating to a section of the route lying ahead and to determine therefrom whether a predefined system limit of the lane keeping system will be exceeded when the section of the route is travelled through, and to output a signal to the driver if it is detected that the predefined system limit is expected to be exceeded.

US 2014/244096 A discloses an apparatus and method for performing cooperative autonomous driving between a vehicle and a driver. For this, a cooperative autonomous driving apparatus includes a driver state determination unit for determining a state of a driver and calculating the state of the driver as a risk index. An autonomous driving control unit classifies section characteristics of respective sections included in a path to a destination corresponding to the driver based on section data stored in a database, and controls autonomous driving of a vehicle in which the driver is riding, based on a driving environment recognized for the path to the destination corresponding to the driver. A driving control determination unit determines driving modes of the respective sections included in the path based on the state of the driver and the section characteristics. The autonomous driving control unit executes a path planning and behavior control algorithm required to conduct autonomous driving. Here, the autonomous driving control unit may calculate an autonomous driving possible section based on the section information updated by an autonomous driving data processing unit. Further, the autonomous driving control unit may exchange information, such as driving mode change notification, risk information notification, and driver command recognition, with the driver, through a Human Vehicle Interface (HVI).

It is an object of the present invention to provide a driver information system and driver information method for a vehicle which are capable to increase driving safety when the vehicle is operated in an autonomous driving mode and switching into a manual driving mode becomes necessary.

The invention relates to a driver information system and a driver information method for a vehicle according to the independent claims. Embodiments thereof are disclosed in the dependent claims.
According to an aspect, there is disclosed a driver information system for a vehicle, comprising a data storing unit which stores road characteristics data associated with a plurality of road sections which are each designated as having been used multiple times by the vehicle for driving in at least two past time instances, a determination unit which is configured to determine a first status of the vehicle which is indicative of whether the vehicle is in an autonomous driving mode or in a manual driving mode, to determine a second status of a road section of the plurality of road sections, which is ahead of the vehicle in the driving direction, the second status being indicative of whether the road section is appropriate or inappropriate for the autonomous driving mode, and to determine an event at which the vehicle is expected to reach the road section, wherein the determination unit is coupled with the data storing unit for determining the second status, and a driver information unit which is configured to provide a notification to the driver indicative of a switch to manual driving mode if the determination unit determines that the first status indicates that the vehicle is in the autonomous driving mode and the second status indicates that the road section is inappropriate for autonomous driving mode. The driver information unit is configured to provide the notification to the driver in advance of the event at which the vehicle is expected to reach the road section with the notification including information of at least one of a distance and time period until the event at which the vehicle is expected to reach the road section.
According to another aspect, there is disclosed a driver information method for a vehicle, comprising determining a first status of the vehicle which is indicative of whether the vehicle is in an autonomous driving mode or in a manual driving mode, and determining a second status of a road section, which is ahead of the vehicle in the driving direction, wherein the second status is indicative of whether the road section is appropriate or inappropriate for the autonomous driving mode, retrieving road characteristics data associated with the road section for determining the second status from a data storing unit which stores road characteristics data associated with a plurality of road sections which are designated as having been used by the vehicle for driving multiple times in at least two past time instances, wherein the road section is comprised in the plurality of road sections, and providing a notification to the driver indicative of a switch to manual driving mode if it is determined that the vehicle is in the autonomous driving mode and the second status indicates that the road section is inappropriate for autonomous driving mode. The notification is provided to the driver in advance of an event at which the vehicle is expected to reach the road section with the notification including information of at least one of a distance and time period until the event at which the vehicle is expected to reach the road section.

According to the present invention, it is possible to provide a driver information system and driver information method for a vehicle which are capable of increasing driving safety when the vehicle is operated in an autonomous driving mode and switching into a manual driving mode becomes necessary. In particular, with providing the notification to the driver in advance of an event at which the vehicle is expected to reach a road section inappropriate for autonomous driving mode in combination with including information about distance and/or time period until the event at which the vehicle is expected to reach the road section, the driver can be informed sufficiently early to take over the steering wheel for manual driving. In combination therewith, since the data storing unit holds road characteristics data, such as available lane markings, of road sections which have been used multiple times in the past, such as on a daily route, the notification can be adapted to the current circumstances of the driver's likely driving route, so that the driver information system is provided with practically relevant and up-to-date information for notifying the driver. For example, the data storing unit holds road characteristics data associated with road sections which are on a frequently used route of the vehicle which has been used by the vehicle at multiple time instances in the past, e.g. are on a daily route of the driver of the vehicle. With the present invention, the driver can thus be provided with precise and up-to-date notifications when the vehicle is in autonomous driving mode at an early stage, and in combination with the additional information about the remaining distance and/or time period until switching into manual driving mode, the driver is able to make appropriate preparations to take over the steering wheel for the manual driving mode sufficiently early.

According to an embodiment, the driver information unit is configured to provide the notification to be displayed on a display device. In this way, an early and clear perception by the driver can be achieved.

According to an embodiment, the driver information unit is configured to provide the notification to be displayed on a head up display device of the vehicle. With such head up display device, the driver can be provided with clear information immediately by blending in the notification at an appropriate location in the driver's view.

According to an embodiment, the driver information unit is configured to provide a further notification to the driver indicative of a potential switch to autonomous driving mode if the determination unit determines that the first status indicates that the vehicle is in the manual driving mode and the second status of another road section, which is ahead of the vehicle in the driving direction, indicates that the another road section is appropriate for autonomous driving mode. The another road section can be part of the plurality of road sections stored in the data storing unit and which were used multiple times by the vehicle in the past. In this way, the driver can be provided with appropriate information as to when the autonomous driving mode can be re-entered.

According to an embodiment, the driver information unit is configured to provide the further notification to the driver in advance of an event at which the vehicle is expected to reach the another road section with the notification including information of at least one of a distance and time period until the event at which the vehicle is expected to reach the another road section. In this way, the driver can be provided with appropriate information as to when the autonomous driving mode can be re-entered sufficiently early and with clear information.

The data storing unit further stores driver behavior related data recorded during driving, wherein the determination unit is coupled with the data storing unit for retrieving the driver behavior related data for determining at least one of a point of time of providing the notification and frequency of providing a plurality of notifications. Thus, the driver information system can learn from driver's individual habits during automated driving and informs the driver accordingly on the display, such as the HUD.

According to an embodiment, the notification is further indicative of a reason for the switch to the manual driving mode. Thus, the driver can be informed sufficiently early and with clear background information to make appropriate preparations for the switching to the manual driving mode.

According to an embodiment, the driver information system further comprises a data acquiring unit which is coupleable with a vehicle image acquisition apparatus, wherein the data acquiring unit is configured to acquire data from the vehicle image acquisition apparatus during driving and is coupled with the data storing unit for recording and/or updating at least some of the road characteristics data in the data storing unit according to the acquired data. Accordingly, the road characteristics data can be recorded according to the current circumstances, so that data can be provided more accurately, and can be kept up to date, e.g., when driving on a daily route and recording any changes in, e.g., any road markings on the route.

For example, the data acquired by the data acquiring unit include data derived from images provided by the vehicle image acquisition apparatus during driving and which comprises at least one vehicle camera. For instance, the vehicle image acquisition apparatus comprises one or more vehicle cameras, such as a stereo camera, which provide images which can be processed by known image recognition techniques for extracting, e.g., image patterns indicative of road markings.

According to an embodiment, the data acquired by the data acquiring unit are indicative of lane markings on a road, a curve rating of a road, and/or markings or signs indicative of a road construction.

According to an embodiment, the data storing unit stores road characteristics data associated with a plurality of road sections which are designated as having been used by the vehicle for driving multiple times in at least two succeeding past time instances. For example, such two succeeding past time instances are included in a daily route. Thus, according to an embodiment, the data storing unit stores road characteristics data associated with a plurality of road sections which are designated as having been used by the vehicle for driving multiple times in a past daily route. As such, the driver information system can learn a daily route and inform the driver very early about changing the driving mode on his frequent or daily route.

In this context, the term "daily route" shall not designate a route which is used strictly every day without interruption, but can also mean a route which is used usually on working days during the week, but usually not on the weekend or public holidays, for example. A daily route is typically significant for driver's personal preferences which roads or road sections are frequently used. According to an embodiment, the designation of road sections in the data storing unit indicating that the respective road section has been used by the vehicle for driving multiple times in the past in at least two different time instances can be established, for example, by using appropriate flags or bits which are associated with the respective road section and, e.g., increased each time the vehicle uses again the respective road section.

According to another aspect, the invention also relates to a vehicle comprising a driver information system as described in the present disclosure.

In particular, the method as described herein may be implemented in principle in any processing device, e.g., on the vehicle or in a separate device, such as a navigation system, which is appropriate to perform the respective function. Such processing device may be, for example, implemented in, or part of, a processor of an ECU (Electronic Control Unit) and/or of a head unit (HU) of the vehicle, or may be a separate component (e.g. coupled to the CAN-Bus of the vehicle), or may be a distributed system using one or more processors and/or integrated circuits.

For example, each one of the determination unit and/or driver information unit may be, at least partially, implemented in hardware and/or in software. Each one or both may be, for example, implemented in, or part of, an ECU and/or HU of the vehicle, or may be a separate component (in hardware and/or software), or may be a common component (e.g. using the same processor), or may be a distributed system (in hardware and/or software) using one or more processors and/or integrated circuits.

Any aspects and embodiments described herein with respect to the method can equally be employed in the driver information system with the determination unit, data storing unit and/or driver information unit configured (by software and/or hardware) appropriately. Conversely, any functions performed by the driver information system can be performed in respective method steps without being limited to the particular entity performing the respective function in the described driver information system.

Exemplary embodiments of the invention are described in greater detail below with reference to the enclosed Figures, in which:
- Fig. 1: shows a schematic depiction of a driver information system according to an embodiment of the invention implemented in a vehicle,
- Fig. 2: shows a schematic depiction of a map with an excerpt of an exemplary route used by the vehicle when in autonomous driving mode according to an embodiment of the invention,
- Fig. 3: shows exemplary depictions of potential notifications provided by the driver information system according to an embodiment of the invention when travelling on an exemplary route as shown in Fig. 2,
- Fig. 4: shows exemplary depictions of potential further notifications provided by the driver information system according to embodiments of the invention,
- Fig. 5: shows exemplary depictions of potential further notifications provided by the driver information system according to embodiments of the invention.

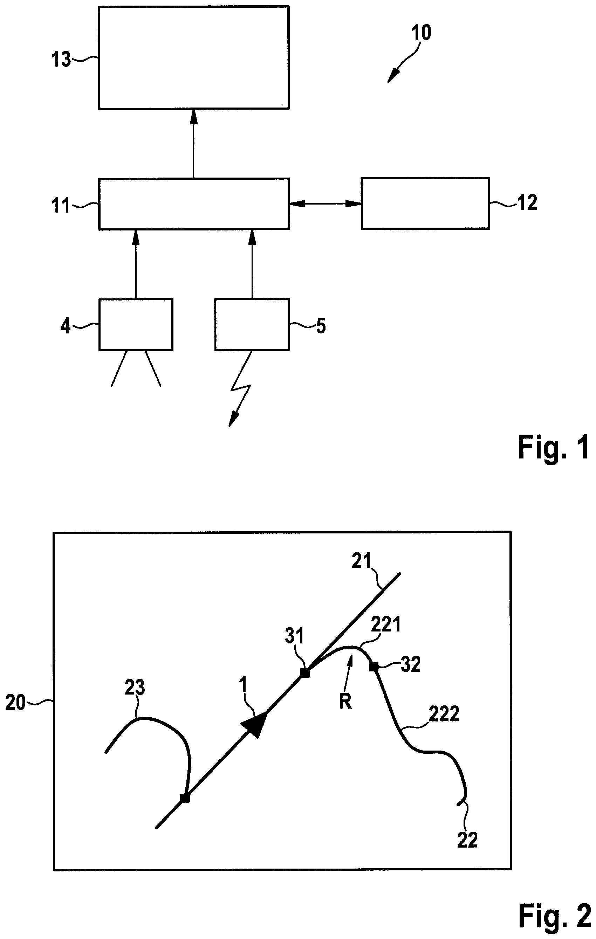

Fig. 1 shows a schematic depiction of a driver information system according to an embodiment of the invention implemented in a vehicle. The driver information system 10 comprises a head unit (HU) 11 which may comprise one or more processors configured to perform multiple functions of the HU. For example, the HU is configured to perform a plurality of functions implemented by hardware and/or software, e.g. in a memory of the HU. The driver information system 10 further comprises a display device 13, such as a head up display (HUD), which is coupled with the HU 11 appropriately for displaying any information provided by the HU to the driver. The display device 13 can be implemented by a separate display device (such as a screen), or can employ, for example, the windscreen of the vehicle as a display area of a HUD, as is commonly known in the art.

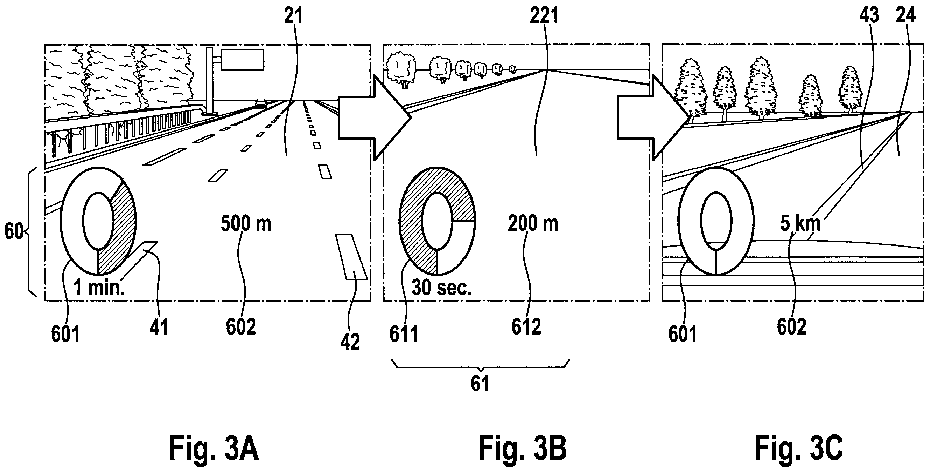

According to embodiments of the present invention, the HU 11 is configured as, or contains, a determination unit (e.g., implemented by software and/or hardware) which determines a first status of the vehicle which is indicative of whether the vehicle is in an autonomous driving mode or in a manual driving mode. The determination unit is further configured to determine a second status of roads or road sections, wherein the second status is indicative of whether the road or road section is appropriate or inappropriate for the autonomous driving mode. For example, if the concerned road or road section is provided with suitable lane markings, such as shown in Figs. 3A and 3C with lane markings 41, 42 43, the road or road section is appropriate for the autonomous driving mode, as commonly known to the skilled person. For example, the lane markings may be captured by a vehicle camera and used as an orientation for the driving direction in the autonomous driving mode. Other road characteristics, such as traffic signs, curve ratings, etc., as is commonly known in the art, may also be used alternatively or additionally to such lane markings for determining whether the road or road section is appropriate for the autonomous driving mode.

The HU 11 is also configured to determine an event at which the vehicle is expected to reach a particular road section, which is ahead of the vehicle in the driving direction. For example, the HU 11 implements one or more functions of a typical navigation system which is capable to determine a point or time along the route (generally referred to as "event") at which the vehicle is expected to reach a particular road section. Once such event on the route is determined, the HU 11 can determine a current distance of the vehicle to this event on the route, and based on a vehicle (current or average) speed, a point of time and/or time period until the vehicle is expected to reach the determined event on the route. To this end, the HU 11 is coupled with, e.g., a GPS sensor 5 for determining a current position of the vehicle.

The term "road section" shall be understood herein as designating any part or section of a road which extends about a certain distance and which is judged to be appropriate or inappropriate for autonomous driving mode within such distance. It is not restricted to any delimited or predefined road sections as defined in a typical navigation system, e.g. between two intersections, or the like. Further, any criteria for judging whether a road section is appropriate or inappropriate for autonomous driving mode may vary depending on implemented technology and performance of autonomous driving mode apparatuses installed in the respective vehicle.

The term "autonomous driving mode" shall be indicative of any driving mode in which the vehicle is operated/driven autonomously or at least semi-autonomously, which encompasses that at least some of the driver's typical manual operations for driving the vehicle, such as manual steering wheel operations, throttle control and/or brake control, are taken over autonomously by vehicle equipment.

The HU 11 is further coupled with a data storing unit 12, such as a non-volatile memory (e.g. a flash memory or hard-disk drive), which stores road characteristics data associated with a plurality of road sections. For example, the road characteristics data may comprise data about lane markings, curve ratings (e.g., curve radius), or other data associated with a particular road section which may be useful for determining whether the vehicle can be operated in an autonomous driving mode on the respective road section.

Particularly, the data storing unit 12 stores road characteristics data associated with a plurality of road sections which have been used multiple times by the vehicle for driving in the past in at least two time instances, which road sections are associated with a corresponding designation (e.g. by respective counting bits, as described above). For example, road sections are stored which are part of a frequently used route, such as a daily route, of the vehicle. The HU 11 is coupled with the data storing unit 12 for determining the second status. The HU 11 is further coupled with a vehicle image acquisition apparatus 4, which comprises one or more vehicle cameras, such as vehicle front cameras.

According to an embodiment, the road characteristics data are record data derived from a vehicle image acquisition apparatus, such as a vehicle camera, during driving. For example, the road characteristics data may be image data combined with position data (e.g., including GPS data) derived from images captured by vehicle camera(s) during driving, for example containing data related to lane markings extracted from such images (e.g., using a commonly known image recognition algorithm for recognition of particular image patterns). As such, the road characteristics data as record data derived from a vehicle image acquisition apparatus 4 are different and contain more information (particularly with respect to information relevant for autonomous driving mode, such as lane markings or curve ratings), and in most cases are more accurate, than ordinary road map data with associated road attributes provided by a map data storage device of a typical navigation system.

In the present embodiment, the HU 11 is also configured as, or comprises, a driver information unit 11 which is configured to provide a notification (such as a notification 60 according to Fig. 3A) to the display device 13 for informing the driver about a switch to manual driving mode if it determines that the vehicle is in the autonomous driving mode and a determined second status indicates that a road section, which the vehicle is expected to arrive at, is inappropriate for autonomous driving mode. For example, the HU 11 generates a corresponding graphical depiction to be displayed on the display device 13. According to an embodiment, the HU 11 comprises a microprocessor which is configured and programmed to perform, both, the described functions of the determination unit and the driver information unit.

Fig. 2 shows a schematic depiction of a map 20 with an excerpt of an exemplary route used by the vehicle when in autonomous driving mode according to an embodiment of the invention. The vehicle 1 is travelling on a road 21 which is part of, e.g., a route the vehicle 1 frequently uses, such as a daily route. For example, the road 21 is a motorway having multiple lanes and corresponding lane markings 41, 42 (cf. Fig. 3A) which may be used appropriately for autonomous driving mode. The map 20 further includes a road 23 (not used by the vehicle 1 on the daily route) and a road 22, which is used by the vehicle 1 on the daily route. The road 22 has road sections 221 and 222, wherein road section 222 is appropriate for autonomous driving mode, and road section 221 is not appropriate for autonomous driving mode (since it has a small curve radius R and/or has no lane markings, cf. Fig. 3B, which may be used for automatic orientation).

Fig. 3 shows exemplary depictions of potential notifications provided by the driver information system 10 of Fig. 1 according to an embodiment of the invention when travelling on an exemplary route as shown in Fig. 2. In the current situation shown in Fig. 2, the vehicle 1 is travelling on road 21 (i.e. the motorway as shown in Fig. 3A) and the HU 11 determines an event 31 at which the vehicle 1 is expected to reach the road section 221 for leaving the motorway 21, which are both part of the daily route, i.e. comprised in the plurality of road sections stored in the data storing unit 12.

The HU 11 provides a notification 60 to the HUD 13 for displaying to the driver in advance of the event 31 at which the vehicle 1 is expected to reach the road section 221. The notification 60 includes information about a distance 602 (here: 500 m) and/or time period 601 (here: 1 min), preferably both, until the event 31 at which the vehicle 1 is expected to reach the road section 221, i.e. until the vehicle 1 is expected to reach the beginning of road section 221, here at the intersection between the roads 21 and 22. In the present embodiment, the driver information system 10 knows the driver's daily route and warns the driver via the HUD 13 more conveniently at what distance and time take over of the steering wheel is necessary, e.g. because of "missing lane" detection 500 meters ahead (see Fig. 3A).

Once the vehicle 1 has reached the road section 221 and travels on road section 221 in manual driving mode, the HU 11 provides a further notification 61 via HUD 13 to the driver indicative of a potential switch to re-enter autonomous driving mode. This is because the HU 11 determines that the vehicle 1 is currently operated in the manual driving mode and the status of road section 222 ahead indicates that the road section 222 is appropriate for autonomous driving mode. The notification 61 is provided in advance of the event 32 at which the vehicle 1 is expected to reach the road section 222. It includes information about a distance 612 and/or time period 611, preferably both, until the event 32. In the depiction of Fig. 3B, the notification 61 indicates that autonomous driving mode is not working without lanes, but lane detection is again available in 200m or 30 seconds. The depiction in Fig. 3C indicates that autonomous driving mode is working again on another road 24 (not shown in Fig. 2) for a longer time (time information 601), i.e. for a distance of 5 km (distance information 602), e.g. because of available lane markings 43.

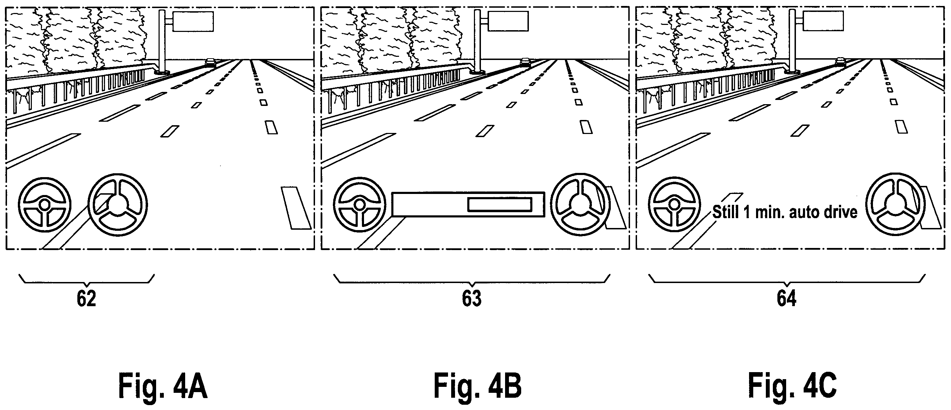

Fig. 4 shows exemplary depictions of potential further notifications 62 to 64 provided by the driver information system 10 according to embodiments of the invention. The data storing unit 12 further stores driver behavior related data recorded during driving. Particularly, the driver information system learns from driver's individual driving habits and informs accordingly in the HUD 13. The HU 11 is coupled with the data storing unit 12 for retrieving the driver behavior related data for determining a point of time of providing the notification and/or a frequency of providing a plurality of notifications.

For example, according to Fig. 4A, a driver A likes to keep his or her hands most of the time on the steering wheel, so that notification 62 indicating autonomous driving mode is provided. According to Fig. 4B, a driver B likes to tap on the steering wheel only once after a certain time, so that a notification 63 is provided. According to Fig. 4C, a driver C likes to be informed all the time with a corresponding notification 64.

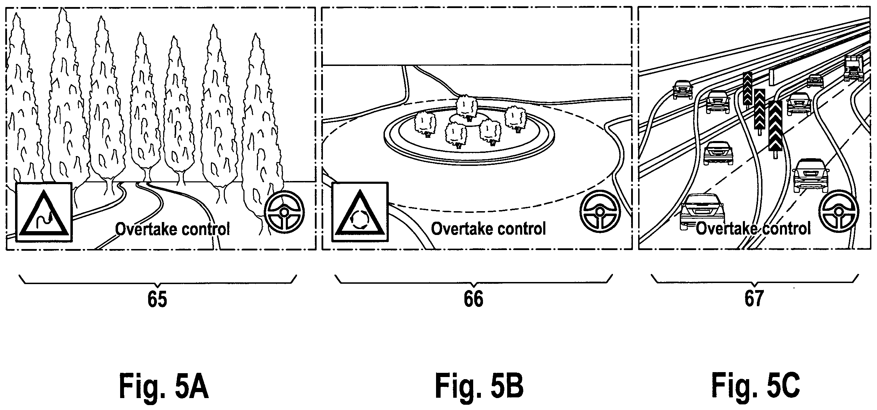

Fig. 5 shows exemplary depictions of potential further notifications provided by the driver information system according to embodiments of the invention. Each of the notifications 65-67 is further indicative of a reason for the switch to the manual driving mode (according to Fig. 5A: narrow curves, Fig. 5B: round about, Fig. 5C: construction lines).

Thus, according to embodiments of the invention, it is possible to provide a predictive driver information system providing clear messages when automated driving is not possible anymore according to the situation. Before any critical situations (e.g., narrow curves, round abouts, construction zones), the driver information system warns the driver to take over the steering wheel at an early stage. Such critical situations can be "learned" from daily driving patterns through a "learning" database which also contains map data indicative of the respective road sections.

## Claims

1. A driver information system (10) for a vehicle (1), comprising
- a data storing unit (12) which stores road characteristics data associated with a plurality of road sections (221, 222) which are each designated as having been used multiple times by the vehicle (1) for driving in at least two past time instances and stores driver behavior related data recorded during driving,
- a determination unit (11) which is configured to determine a first status of the vehicle (1) which is indicative of whether the vehicle is in the autonomous driving mode or in a manual driving mode, to determine a second status of a road section (221) of the plurality of road sections, which is ahead of the vehicle (1) in the driving direction, the second status being indicative of whether the road section (221) is appropriate or inappropriate for the autonomous driving mode, and to determine an event (31) at which the vehicle (1) is expected to reach the road section (221), wherein the determination unit (11) is coupled with the data storing unit (12) for determining the second status, and
- a driver information unit (11) which is configured to provide a notification (60) to the driver indicative of a switch to manual driving mode if the determination unit (11) determines that the first status indicates that the vehicle (1) is in the autonomous driving mode and the second status indicates that the road section (221) is inappropriate for autonomous driving mode,
- wherein the driver information unit (11) is configured to provide the notification (60) to the driver in advance of the event (31) at which the vehicle (1) is expected to reach the road section (221) with the notification (60) including information of at least one of a distance (602) and time period (601) until the event (31) at which the vehicle (1) is expected to reach the road section (221), wherein the determination unit (11) is coupled with the data storing unit (12) for retrieving the driver behavior related data for determining at least one of a point of time of providing the notification (60) and frequency of providing a plurality of notifications (60, 62-64).

2. The driver information system according to claim 1, wherein the driver information unit (11) is configured to provide the notification (60) to be displayed on a display device (13).

3. The driver information system according to claim 2, wherein the driver information unit (11) is configured to provide the notification (60) to be displayed on a head up display device (13) of the vehicle.

4. The driver information system according to one of claims 1 to 3, wherein the driver information unit (11) is configured to provide a further notification (61) to the driver indicative of a potential switch to autonomous driving mode if the determination unit (11) determines that the first status indicates that the vehicle (1) is in the manual driving mode and the second status of another road section (222), which is ahead of the vehicle (1) in the driving direction, indicates that the another road section (222) is appropriate for autonomous driving mode.

5. The driver information system according to claim 4, wherein the driver information unit (11) is configured to provide the further notification (61) to the driver in advance of an event (32) at which the vehicle (1) is expected to reach the another road section (222) with the further notification (61) including information of at least one of a distance (612) and time period (611) until the event (32) at which the vehicle (1) is expected to reach the another road section (222).

6. The driver information system according to one of claims 1 to 5, wherein the notification (60, 65-67) is further indicative of a reason for the switch to the manual driving mode.

7. The driver information system according to one of claims 1 to 6, further comprising a data acquiring unit (11) which is coupleable with a vehicle image acquisition apparatus (4), wherein the data acquiring unit (11) is configured to acquire data from the vehicle image acquisition apparatus (4) during driving and is coupled with the data storing unit (12) for recording and/or updating at least some of the road characteristics data in the data storing unit (12) according to the acquired data.

8. The driver information system according to claim 7, wherein the data acquired by the data acquiring unit (11) are indicative of at least one of the following: lane markings (41, 42, 43) on a road, a curve rating (R) of a road, markings indicative of a road construction.

9. The driver information system according to one of claims 1 to 6 and 8, wherein the road characteristics data are record data recorded and derived from a vehicle image acquisition apparatus (4) during driving.

10. A vehicle (1) comprising a driver information system (10) according to one of the preceding claims.

11. A driver information method for a vehicle (1), comprising
- determining a first status of the vehicle (1) which is indicative of whether the vehicle is in an autonomous driving mode or in a manual driving mode, and determining a second status of a road section (221), which is ahead of the vehicle (1) in the driving direction, wherein the second status is indicative of whether the road section (221) is appropriate or inappropriate for the autonomous driving mode,
- retrieving road characteristics data associated with the road section (221) for determining the second status from a data storing unit (12) which stores road characteristics data associated with a plurality of road sections (221, 222) which are designated as having been used by the vehicle (1) for driving multiple times in at least two past time instances, wherein the road section (221) is comprised in the plurality of road sections, and stores driver behavior related data recorded during driving,
- providing a notification (60) to the driver indicative of a switch to manual driving mode if it is determined that the vehicle (1) is in the autonomous driving mode and the second status indicates that the road section (221) is inappropriate for autonomous driving mode,
- wherein the notification (60) is provided to the driver in advance of an event (31) at which the vehicle (1) is expected to reach the road section (221) with the notification (60) including information of at least one of a distance (602) and time period (601) until the event (31) at which the vehicle (1) is expected to reach the road section (221), and retrieving the driver behavior related data for determining at least one of a point of time of providing the notification (60) and frequency of providing a plurality of notifications (60, 62-64).

12. The method according to claim 11, further comprising acquiring data from a vehicle image acquisition apparatus (4) during driving and recording and/or updating at least some of the road characteristics data according to the acquired data in the data storing unit (12).

13. The method according to claim 12, wherein the acquired data are indicative of at least one of the following: lane markings (41, 42, 43) on a road, a curve rating (R) of a road, markings or a sign indicative of a road construction.

14. The method according to one of claims 11 to 13, wherein the data storing unit (12) stores road characteristics data associated with a plurality of road sections (221, 222) which are designated as having been used by the vehicle (1) for driving multiple times in at least two succeeding past time instances, particularly in a past daily route.

## Patentansprüche

1. Fahrerinformationssystem (10) für ein Fahrzeug (1), aufweisend:
- eine Datenspeichereinheit (12), die Straßeneigenschaftsdaten speichert, die einer Mehrzahl von Straßenabschnitten (221, 222) zugeordnet sind, die jeweils als mehrfach von dem Fahrzeug (1) zum Fahren zu mindestens zwei vergangenen Zeiten verwendet benannt wurden, und die mit dem Fahrerverhalten in Beziehung stehende Daten speichert,
- eine Bestimmungseinheit (11), die dazu ausgebildet ist, einen ersten Status des Fahrzeugs (1) zu bestimmen, der anzeigt, ob sich das Fahrzeug in einem autonomen Fahrmodus oder in einem manuellen Fahrmodus befindet, einen zweiten Status eines Straßenabschnitts (221) der Mehrzahl von Straßenabschnitten zu bestimmen, der sich in Fahrtrichtung vor dem Fahrzeug (1) befindet, wobei der zweite Status anzeigt, ob der Straßenabschnitt (221) für den autonomen Fahrmodus geeignet oder ungeeignet ist, sowie ein Ereignis (31) zu ermitteln, bei dem das Fahrzeug (1) den Straßenabschnitt (221) voraussichtlich erreicht, wobei die Bestimmungseinheit (11) mit der Datenspeichereinheit (12) gekoppelt ist, um den zweiten Status zu ermitteln, und
- eine Fahrerinformationseinheit (11), die dazu ausgebildet ist, dem Fahrer eine Mitteilung (60) bereitzustellen, die einen Wechsel in den manuellen Fahrmodus anzeigt, wenn die Bestimmungseinheit (11) feststellt, dass der erste Status anzeigt, dass sich das Fahrzeug (1) in dem autonomen Fahrmodus befindet, und der zweite Status anzeigt, dass der Straßenabschnitt (221) für den autonomen Fahrmodus ungeeignet ist,
- wobei die Fahrerinformationseinheit (11) dazu ausgebildet ist, die Mitteilung (60) dem Fahrer vor dem Ereignis (31) bereitzustellen, bei dem das Fahrzeug (1) den Straßenabschnitt (221) voraussichtlich erreicht, wobei die Mitteilung (60) Information über mindestens eines von einer Entfernung (602) und einer Zeitdauer (601) bis zu dem Ereignis (31) beinhaltet, bei dem das Fahrzeug (1) den Straßenabschnitt (221) voraussichtlich erreicht, wobei die Bestimmungseinheit (11) mit der Datenspeichereinheit (12) gekoppelt ist, um die mit dem Fahrerverhalten in Beziehung stehenden Daten abzurufen, um mindestens eines von einem Zeitpunkt der Bereitstellung der Mitteilung (60) und einer Häufigkeit der Bereitstellung einer Mehrzahl von Mitteilungen (60, 62-64) zu bestimmen.

2. Fahrerinformationssystem nach Anspruch 1,
wobei die Fahrerinformationseinheit (11) dazu ausgebildet ist, die Mitteilung (60) zur Anzeige auf einer Anzeigevorrichtung (13) bereitzustellen.

3. Fahrerinformationssystem nach Anspruch 2,
wobei die Fahrerinformationseinheit (11) dazu ausgebildet ist, die Mitteilung (60) zur Anzeige auf einer Head-Up-Anzeigevorrichtung (13) des Fahrzeugs bereitzustellen.

4. Fahrerinformationssystem nach einem der Ansprüche 1 bis 3,
wobei die Fahrerinformationseinheit (11) dazu ausgebildet ist, dem Fahrer eine weitere Mitteilung (61) bereitzustellen, die einen möglichen Wechsel in den autonomen Fahrmodus anzeigt, wenn die Bestimmungseinheit (11) feststellt, dass der erste Status anzeigt, dass sich das Fahrzeug (1) in dem manuellen Fahrmodus befindet, und der zweite Status eines weiteren Straßenabschnitts (222), der in Fahrtrichtung vor dem Fahrzeug (1) liegt, anzeigt, dass der weitere Straßenabschnitt (222) für den autonomen Fahrmodus geeignet ist.

5. Fahrerinformationssystem nach Anspruch 4,
wobei die Fahrerinformationseinheit (11) dazu ausgebildet ist, dem Fahrer die weitere Mitteilung (61) vor einem Ereignis (32) bereitzustellen, bei dem das Fahrzeug (1) einen weiteren Straßenabschnitt (222) voraussichtlich erreicht, wobei die weitere Mitteilung (61) Information über mindestens eines von einer Entfernung (612) und einer Zeitdauer (611) bis zu dem Ereignis (32) beinhaltet, bei dem das Fahrzeug (1) den weiteren Straßenabschnitt (222) voraussichtlich erreicht.

6. Fahrerinformationssystem nach einem der Ansprüche 1 bis 5,
wobei die Mitteilung (60, 65-67) ferner einen Grund für den Wechsel in den manuellen Fahrmodus anzeigt.

7. Fahrerinformationssystem nach einem der Ansprüche 1 bis 6,
das ferner eine Datenerfassungseinheit (11) aufweist, die mit einer Fahrzeugbilderfassungsvorrichtung (4) koppelbar ist, wobei die Datenerfassungseinheit (11) dazu ausgebildet ist, Daten von der Fahrzeugbilderfassungsvorrichtung (4) während der Fahrt zu erfassen und mit der Datenspeichereinheit (12) zum Aufzeichnen und/oder Aktualisieren zumindest einiger der Straßeneigenschaftsdaten in der Datenspeichereinheit (12) gemäß den erfassten Daten gekoppelt ist.

8. Fahrerinformationssystem nach Anspruch 7,
wobei die von der Datenerfassungseinheit (11) erfassten Daten mindestens einen der folgenden Faktoren anzeigen: Fahrspurmarkierungen (41, 42, 43) auf einer Straße, eine Kurvenbewertung (R) einer Straße, Markierungen, die auf einen Straßenbau hinweisen.

9. Fahrerinformationssystem nach einem der Ansprüche 1 bis 6 und 8,
wobei die Straßeneigenschaftsdaten Aufzeichnungsdaten sind, die während der Fahrt von einer Fahrzeugbilderfassungsvorrichtung (4) aufgezeichnet und abgeleitet werden.

10. Fahrzeug (1) mit einem Fahrerinformationssystem (10) nach einem der vorhergehenden Ansprüche.

11. Fahrerinformationsverfahren für ein Fahrzeug (1), das folgende Schritte aufweist:
- Bestimmen eines ersten Status des Fahrzeugs (1), der anzeigt, ob sich das Fahrzeug in einem autonomen Fahrmodus oder in einem manuellen Fahrmodus befindet, und Bestimmen eines zweiten Status eines Straßenabschnitts (221), der sich in Fahrtrichtung vor dem Fahrzeug (1) befindet, wobei der zweite Status anzeigt, ob der Straßenabschnitt (221) für den autonomen Fahrmodus geeignet oder ungeeignet ist,
- Abrufen von dem Straßenabschnitt (221) zugeordneten Straßeneigenschaftsdaten zum Bestimmen des zweiten Status von einer Datenspeichereinheit (12), die Straßeneigenschaftsdaten speichert, die einer Mehrzahl von Straßenabschnitten (221, 222) zugeordnet sind, die als von dem Fahrzeug (1) zum mehrmaligen Fahren zu mindestens zwei vergangenen Zeiten verwendet benannt wurden, wobei der Straßenabschnitt (221) in der Mehrzahl von Straßenabschnitten enthalten ist, und die mit dem Fahrerverhalten in Beziehung stehende Daten während der Fahrt speichert,
- Bereitstellen einer Mitteilung (60) an den Fahrer, die einen Wechsel in den manuellen Fahrmodus anzeigt, wenn festgestellt wird, dass sich das Fahrzeug (1) in dem autonomen Fahrmodus befindet und der zweite Status anzeigt, dass der Straßenabschnitt (221) für den autonomen Fahrmodus ungeeignet ist,
- wobei die Mitteilung (60) an den Fahrer vor einem Ereignis (31) bereitgestellt wird, bei dem das Fahrzeug (1) den Straßenabschnitt (221) voraussichtlich erreicht, wobei die Mitteilung (60) Information über mindestens eines von einer Entfernung (602) und einer Zeitdauer (601) bis zu dem Ereignis (31) beinhaltet, bei dem das Fahrzeug (1) den Straßenabschnitt (221) voraussichtlich erreicht, und Abrufen der mit dem Fahrerverhalten in Beziehung stehenden Daten zum Bestimmen von mindestens einem von einem Zeitpunkt der Bereitstellung der Mitteilung (60) und einer Häufigkeit der Bereitstellung einer Mehrzahl von Mitteilungen (60, 62-64).

12. Verfahren nach Anspruch 11,
das ferner das Erfassen von Daten von einer Fahrzeugbilderfassungsvorrichtung (4) während der Fahrt sowie das Aufzeichnen und/oder Aktualisieren von mindestens einigen der Straßeneigenschaftsdaten gemäß den erfassten Daten in der Datenspeichereinheit (12) beinhaltet.

13. Verfahren nach Anspruch 12,
wobei die erfassten Daten mindestens einen der folgenden Faktoren anzeigen: Fahrspurmarkierungen (41, 42, 43) auf einer Straße, eine Kurvenbewertung (R) einer Straße, Markierungen oder ein Zeichen, die auf einen Straßenbau hinweisen.

14. Verfahren nach einem der Ansprüche 11 bis 13,
wobei die Datenspeichereinheit (12) Straßeneigenschaftsdaten speichert, die einer Mehrzahl von Straßenabschnitten (221, 222) zugeordnet sind, die als von dem Fahrzeug (1) zum mehrmaligen Fahren zu mindestens zwei aufeinanderfolgenden vergangenen Zeiten, insbesondere auf einer vergangenen täglichen Route, verwendet benannt wurden.

## Revendications

1. Système (10) destiné à fournir des informations à un conducteur pour un véhicule (1), comprenant :
- une unité de mise en mémoire de données (12) qui met en mémoire des données caractéristiques de routes associées à un certain nombre de tronçons de routes (221, 222) qui sont chacun considérés comme ayant été empruntés à plusieurs reprises par le véhicule (1) à des fins de déplacement à concurrence d'au moins deux fois par le passé et qui met en mémoire des données liées au comportement du conducteur enregistrées au cours de la conduite ;
- une unité de détermination (11) qui est configurée : pour déterminer un premier état du véhicule (1) qui fournit des indications quant au fait de savoir si le véhicule se trouve dans un mode de conduite autonome ou dans un mode de conduite manuelle ; pour déterminer un deuxième état d'un tronçon de route (221), parmi lesdits plusieurs tronçons de routes, à venir par rapport au véhicule (1) dans la direction de déplacement, le deuxième état fournissant des indications quant au fait de savoir si le tronçon de route (221) est approprié ou inapproprié pour le mode de conduite autonome ; et pour déterminer un événement (31) auquel le véhicule (1) est censé s'attendre pour atteindre le tronçon de route (221) ; dans lequel l'unité de détermination (11) est accouplée à l'unité de mise en mémoire de données (12) pour la détermination du deuxième état ; et
- une unité (11) destinée à fournir des informations à un conducteur, qui est configurée pour fournir une notification (60) au conducteur qui lui indique un passage par commutation au mode de conduite manuelle lorsque l'unité de détermination (11) détermine que le premier état indique le véhicule (1) se trouve dans le mode de conduite autonome et que le deuxième état indique que le tronçon de route (221) est inapproprié pour le mode de conduite autonome ;
- dans lequel l'unité (11) destinée à fournir des informations à un conducteur est configurée pour fournir la notification (60) à un conducteur avant l'événement (31) auquel le véhicule (1) est censé s'attendre pour atteindre le tronçon de route (221), la notification (60) englobant des informations concernant au moins un élément choisi parmi une distance (602) et un laps de temps (601) jusqu'à l'événement (31) auquel le véhicule (1) est censé s'attendre pour atteindre le tronçon de route (221) ; dans lequel l'unité de détermination (11) est accouplée à l'unité de mise en mémoire de données (12) pour l'extraction des données concernant le comportement du conducteur afin de déterminer au moins un élément choisi parmi un moment lié à la fourniture de la notification (60) et la fréquence de procuration de plusieurs notifications (60, 62-64).

2. Système destiné à fournir des informations à un conducteur selon la revendication 1, dans lequel l'unité (11) destinée à fournir des informations à un conducteur est configurée pour fournir la notification (60) qui doit être affichée sur un dispositif d'affichage (13).

3. Système destiné à fournir des informations à un conducteur selon la revendication 2, dans lequel l'unité (11) destinée à fournir des informations à un conducteur est configurée pour fournir la notification (60) qui doit être affichée sur un dispositif d'affichage tête haute (13) du véhicule.

4. Système destiné à fournir des informations à un conducteur selon l'une quelconque des revendications 1 à 3, dans lequel l'unité (11) destinée à fournir des informations à un conducteur est configurée pour fournir une notification supplémentaire (61) au conducteur qui fournit une indication concernant un passage potentiel par commutation au mode de conduite autonome lorsque l'unité de détermination (11) détermine que le premier état indique que le véhicule (1) se trouve dans le mode de conduite manuelle et que le deuxième état d'un autre tronçon de route (222), qui se trouve à l'avant du véhicule (1) dans la direction de déplacement, indique que l'autre tronçon de route (222) est approprié pour le mode de conduite autonome.

5. Système destiné à fournir des informations à un conducteur selon la revendication 4, dans lequel l'unité (11) destinée à fournir des informations à un conducteur est configurée pour fournir la notification supplémentaire (61) au conducteur avant un événement (32) auquel le véhicule (1) est censé s'attendre pour atteindre l'autre tronçon de route (222), la notification supplémentaire (61) englobant des informations concernant au moins un élément choisi parmi une distance (612) et un laps de temps (611) jusqu'à l'événement (32) auquel le véhicule (1) est censé s'attendre pour atteindre l'autre tronçon de route (222).

6. Système destiné à fournir des informations à un conducteur selon l'une quelconque des revendications 1 à 5, dans lequel la notification (60, 62-64) fournit également des indications concernant une raison expliquant le passage par commutation au mode de conduite manuelle.

7. Système destiné à fournir des informations à un conducteur selon l'une quelconque des revendications 1 à 6, comprenant en outre une unité d'acquisition de données (11) qui peut être accouplée à un appareil d'acquisition d'images du véhicule (4) ; dans lequel l'unité d'acquisition de données (11) est configurée pour acquérir des données à partir de l'appareil d'acquisition d'images du véhicule (4) au cours de la conduite et est accouplée à l'unité de mise en mémoire de données (12) pour l'enregistrement et/ou la mise à jour d'au moins un certain nombre des données de caractéristiques de routes dans l'unité de mise en mémoire de données (12) en fonction des données acquises.

8. Système destiné à fournir des informations à un conducteur selon la revendication 7, dans lequel les données acquises par l'unité d'acquisition de données (11) fournissent des indications concernant au moins un des éléments repris ci-après : des marquages de voies (41, 42, 43) sur une route, l'évaluation d'un virage (R) d'une route, des marquages signalant des travaux routiers.

9. Système destiné à fournir des informations à un conducteur selon l'une quelconque des revendications 1 à 6 et 8, dans lequel les données caractéristiques de routes sont des données d'enregistrement qui ont été enregistrées et qui dérivent d'un appareil d'acquisition d'images du véhicule (4) au cours de la conduite.

10. Véhicule (1) comprenant un système (10) destiné à fournir des informations à un conducteur selon l'une quelconque des revendications précédentes.

11. Procédé destiné à fournir des informations à un conducteur pour un véhicule (1), comprenant le fait de :
- déterminer un premier état du véhicule (1) qui fournit des indications quant au fait de savoir si le véhicule se trouve dans un mode de conduite autonome ou dans un mode de conduite manuelle et déterminer un deuxième état d'un tronçon de route (221) qui se trouve en avant par rapport au véhicule (1) dans la direction de déplacement, le deuxième état fournissant des indications quant au fait de savoir si le tronçon de route (221) est approprié ou inapproprié pour le mode de conduite autonome ;
- extraire des données caractéristiques de routes associées au tronçon de route (221) dans le but de déterminer le deuxième état à partir d'une unité de mise en mémoire de données (12) dans laquelle sont mises en mémoire des données caractéristiques de routes associées à un certain nombre de tronçons de routes (221, 222) qui sont chacun considérés comme ayant été empruntés à plusieurs reprises par le véhicule (1) à des fins de déplacement au moins deux fois dans le passé, le tronçon de route (221) étant compris dans lesdits plusieurs tronçons de routes, et unité (12) dans laquelle sont mises en mémoire des données concernant le comportement du conducteur enregistrées au cours de la conduite ;
- fournir une notification (60) au conducteur qui lui indique un passage par commutation au mode de conduite manuelle lorsqu'il est déterminé que le véhicule (1) se trouve dans le mode de conduite autonome et que le deuxième état indique que le tronçon de route (221) est inapproprié pour le mode de conduite autonome ;
- dans lequel la notification (60) est fournie au conducteur avant un événement (31) auquel le véhicule (1) est censé s'attendre pour atteindre le tronçon de route (221), la notification (60) englobant des informations concernant au moins un élément choisi parmi une distance (602) et un laps de temps (601) jusqu'à l'événement (31) auquel le véhicule (1) est censé s'attendre pour atteindre le tronçon de route (221) ; et extraire les données concernant le comportement du conducteur afin de déterminer au moins un élément choisi parmi un moment lié à la fourniture de la notification (60) et la fréquence de procuration de plusieurs notifications (60, 62-64).

12. Procédé selon la revendication 11, comprenant en outre le fait d'acquérir des données à partir d'un appareil d'acquisition d'images du véhicule (4) au cours de la conduite et le fait d'enregistrer et/ou de mettre à jour au moins un certain nombre des données de caractéristiques de route en fonction des données acquises dans l'unité de mise en mémoire de données (12).

13. Procédé selon la revendication 12, dans lequel les données acquises fournissent des indications concernant au moins un des éléments repris ci-après : des marquages de voies (41, 42, 43) sur une route, l'évaluation d'un virage (R) d'une route, des marquages ou un panneau signalant des travaux routiers.

14. Procédé selon l'une quelconque des revendications 11 à 13, dans lequel l'unité de mise en mémoire de données (12) met en mémoire des données caractéristiques de route associées à un certain nombre de tronçons de routes (221, 222) qui sont chacun considérés comme ayant été empruntés à plusieurs reprises par le véhicule (1) à des fins de déplacement à concurrence d'au moins deux fois successives dans le passé, en particulier au cours d'un trajet quotidien passé.
